# EUROPEAN PATENT APPLICATION

(11) **EP 4 397 546 A1**
(43) Date of publication of application: **10.07.2024**
(21) Application number: 23175939.0
(22) Date of filing: 30.05.2023
(51) Int. Cl.: B60R 16/03, B60R 16/023, B60L 58/00, G01R 31/36, H01R 13/447, H01R 13/648, H05K 5/04, H01R 13/70

(54) **A HOUSING FOR A HIGH VOLTAGE COMPONENT, AN ELECTRIC SYSTEM AND A VEHICLE**

(71) Applicant: VOLVO TRUCK CORPORATION, 405 08 Göteborg (SE)
(72) Inventor: Melaugh, John, 413 22 Göteborg (SE); Eriksson, Tommie, 416 60 Göteborg (SE)
(74) Representative: Valea AB

(57) **Abstract**

The disclosure relates to a housing (1) for a high voltage component (10) protected by a hazardous voltage interlock loop (12). The housing (1) comprises an inner compartment (14) configured to at least partially enclose a high voltage component (10), an inner cover (16) configured to prevent access to the inner compartment (14), an outer cover (20) movable to and from a first position, and configured to cover and to prevent access to the at least one fastening device (18) of the inner cover (16), and a switch (22) configured to close the hazardous voltage interlock loop (12) when the outer cover (20) is in the first position. The outer cover (20) is releasably fixable in relation to the inner cover (16) in the first position by a hand-operated locking mechanism, and the switch (22) is configured to open the hazardous voltage interlock loop (12) to discharge an electric potential of the high voltage component (10) when the outer cover (20) is moved from the first position. The disclosure further relates to a high voltage electric system comprising the housing (1) and to a vehicle (3) comprising the high voltage electric system (2).

## Description

### TECHNICAL FIELD

The disclosure relates generally to protection of hazardous voltage electric components. In particular aspects, the disclosure relates to a housing for a high voltage electric component. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

When working on high voltage components it should not be possible to touch (with hand or tool) live parts before the system has discharged. The discharge is triggered by opening a HVIL (Hazardous Voltage Interlock Loop). The system discharges to a safe level after a predetermined period of time, such as approximately five seconds. For this reason, it may be necessary to implement a so-called 'slow-down' cover to prevent touching live parts before the system has discharged.

Some slow-down covers are located behind outer (service) covers on several components, such as electric machines. These covers usually have at least four small screws to ensure that the disassembly time exceeds the discharge time. The HVIL is opened once the outer cover is removed. After subsequently removing the inner slow-down cover, the system should be discharged and safe. This means that the screws on the outer cover are not contributing to exceeding the discharge time and are instead adding part cost and assembly time.

### SUMMARY

According to a first aspect of the disclosure, there is provided a housing for a high voltage component protected by a hazardous voltage interlock loop. The housing comprises an inner compartment configured to at least partially, or fully, enclose a high voltage component.

The housing further comprises an inner cover removably attached to the inner compartment by at least one fastening device and configured to prevent access to the inner compartment when attached to the inner compartment.

The housing also comprises an outer cover movable to and from a first position, in which first position the outer cover is configured to cover and to prevent access to the at least one fastening device of the inner cover.

The housing further comprises a switch configured to close the hazardous voltage interlock loop when the outer cover is in the first position. The outer cover is releasably fixable in relation to the inner cover in the first position by a hand-operated locking mechanism. The switch is configured to open the hazardous voltage interlock loop to discharge an electric potential of the high voltage component when the outer cover is moved from the first position. The first aspect of the disclosure may seek to enable a quick and easy opening of the hazardous voltage interlock loop without exposing a user to any high voltage potentials. A technical benefit may include that removal of the outer cover, triggering the opening of the hazardous voltage interlock loop, does not require any significant time or effort when opening the housing. However, the inner cover is still provided with fastening means that ensure that the hazardous voltage interlock loop is opened before the inner cover can be removed.

The high voltage component may be at least partially enclosed by the inner compartment such that a user or operator is unable to touch the high voltage component as long as the inner compartment is closed by the inner cover. The component may for instance be an electrically conductive part of a high voltage electric system, such as at least one cable connector. An electrically conductive part of the high voltage component may be fully enclosed by the inner compartment, whereas an electrically insulated part of the high voltage component, e.g. an electrically insulated cable, may be arranged to extend from the inner compartment via a through-hole.

The at least one fastening device of the inner cover may be configured to prevent a user from opening the inner compartment before the hazardous voltage interlock loop has discharged any electric potential of the high voltage component located in the inner compartment. As an example, the at least one fastening device may have a low pitch thread, requiring time to unfasten. Alternatively, a plurality of fastening devices may have to be released or removed before the inner cover may be removed.

The at least one fastening device is inaccessible when the outer cover is in the first position. The outer cover must be moved from the first position before the at least one fastening device may be accessed. Consequently, the hazardous voltage interlock loop needs to be opened, by moving the outer cover from the first position and triggering the switch, before the at least one fastening device of the inner cover may be accessed.

A "hand-operated locking mechanism" is herein to be understood as a locking mechanism which may be opened by hand, without any tools. Any tools are optional. A purpose may be to simplify the opening of the hazardous voltage interlock loop by making the outer cover easy to move from the first position.

Optionally in some examples, including in at least one preferred example, the switch may be resiliently biased by the outer cover to close the hazardous voltage interlock loop when the outer cover is in the first position and wherein the switch is configured to be released by the outer cover to open the hazardous voltage interlock loop when the outer cover is moved from the first position. The switch may be a spring-biased button which is depressed when the outer cover is in the first position, thereby closing the hazardous voltage interlock loop. When the outer cover is moved from the first position, the spring-biased button may be released to open the hazardous voltage interlock loop.

Optionally in some examples, including in at least one preferred example, the switch may comprise a sensor and the outer cover may comprise a magnet, such as a permanent magnet. The sensor may be configured to detect the presence of the outer cover in the first position by detecting a magnetic field of the magnet to control the switch to close the hazardous voltage interlock loop when the outer cover is in the first position and to open the hazardous voltage interlock loop when the outer cover is moved from the first position. A sensor detecting a magnetic field obviates the need of a mechanical switch.

Optionally in some examples, including in at least one preferred example, the locking mechanism comprises form-locking members of at least the outer cover. The form-locking members may reliably keep the outer cover in the first position while at the same time offering a user a simple and quick solution for moving the outer cover from the first position when the inner cover is to be removed to open the inner compartment.

Optionally in some examples, including in at least one preferred example, the form-locking members may be configured to releasably fix the outer cover in the first position relative to the inner cover in form-locking and frictional engagement. Thereby, applying a manual force to the form-locking members may release and disengage the form-locking members.

Optionally in some examples, including in at least one preferred example, the form-locking members may be resiliently flexible and configured to enable a sliding movement of the outer cover relative to the inner cover to and from the first position. Applying a manual force to the form-locking members may thus resiliently flex the form-locking member out of engagement and release the outer cover to be moved from the first position. The resilience of the form-locking members may allow the outer cover to be returned to the first position when the inner cover and the inner compartment have been closed.

Optionally in some examples, including in at least one preferred example, the locking mechanism may comprise at least one magnet releasably fixing the outer cover in the first position in relation to the inner cover. Thereby, the outer cover may be moved from the first position by simply overcoming an attracting force of the at least one magnet. The at least one magnet may be configured such that the attracting force of the magnet reliably keeps the outer cover in the first position and that a manual operation of a user is required to move the outer cover from the first position.

Optionally in some examples, including in at least one preferred example, the locking mechanism may comprise mutually inclined surfaces, of at least the outer cover, the mutually inclined surfaces may be configured to enable rotational movement of the outer cover in relation to the inner cover to releasably fix the outer cover in relation to the inner cover in the first position. Thus, a manual turning operation may release the outer cover to be moved from the first position.

Optionally in some examples, including in at least one preferred example, the mutually inclined surfaces may comprise mutually engaging threads. Accordingly, the outer cover may be a rotatable lid, engaged to the inner cover or to the inner compartment by the mutually engaging threads.

Optionally in some examples, including in at least one preferred example, the mutually inclined surfaces may comprise a bayonet connection.

Optionally in some examples, including in at least one preferred example, the locking mechanism may comprise a lock and the outer cover may be arranged on a hinge between the outer cover and the inner cover, or between the outer cover and the inner compartment. The outer cover may be moved from the first position by opening the lock and rotating the outer cover around the hinge.

Optionally in some examples, including in at least one preferred example, the lock may comprise a spring pin configured to releasably fix the outer cover in relation to the inner cover in the first position. The spring pin may be spring-biased, and the lock may be opened by manually operating the spring pin, thereby enabling opening of the outer cover.

Optionally in some examples, including in at least one preferred example, the lock may comprise a locking pin configured to releasably fix the outer cover in relation to the inner cover in the first position. The locking pin may be removed to open the outer cover.

According to a second aspect of the disclosure, there is provided a high voltage electric system for a vehicle. The high voltage electric system comprises a hazardous voltage interlock loop, a high voltage electric energy storage system and at least one housing according to any one of the examples of the first aspect of the disclosure. The second aspect of the disclosure provides a safe and reliable high voltage electric system which allows easy, but safe, access to high voltage components.

According to a third aspect of the disclosure, there is provided a vehicle comprising the high voltage electric system of the second aspect of the disclosure. A vehicle comprising the high voltage electric system allows easier, but safe, maintenance and service of the vehicle.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary side-view of a vehicle according to an example.
**FIG. 2** is an exemplary cross-sectional side-view of a housing according to an example.
**FIG. 3** is an exemplary cross-sectional side-view of a housing according to an example.
**FIG. 4** is an exemplary view of an inner cover according to an example.
**FIG. 5** is an exemplary view of an inner compartment according to an example.
**FIG. 6** is an exemplary cross-sectional side-view of a housing according to an example.
**FIG. 7** is an exemplary cross-sectional side-view of a housing according to an example.
**FIG. 8** is an exemplary perspective view of a housing according to an example.
**FIG. 9** is an exemplary perspective view of a housing according to an example.
**FIG. 10** is an exemplary cross-sectional side-view of a housing according to an example.
**FIG. 11** is an exemplary cross-sectional side-view of a housing according to an example.
**FIG. 12** is an exemplary view of an outer cover according to an example.
**FIG. 13** is an exemplary side-view of a housing according to an example.
**FIG. 14** is an exemplary side-view of a housing according to an example.
**FIG. 15** is an exemplary view of an outer cover and a locking mechanism according to an example.
**FIG. 16** is an exemplary side-view of a housing according to an example.
**FIG. 17** is an exemplary side-view of a housing according to an example.
**FIG. 18** are exemplary locks according to an example.

### DETAILED DESCRIPTION

The detailed description set forth below provides information and examples of the disclosed technology with sufficient detail to enable those skilled in the art to practice the disclosure.

To prevent touching, with hand or tool, live components in high voltage electric systems, there may be provided housings which enclose the components. In order to access such a high voltage component, it is necessary to open a HVIL (hazardous voltage interlock loop) before opening the housing. Conventionally, the hazardous voltage interlock loop is opened by opening an outer cover which prevents access to an inner cover which encloses the component in the housing. The inner cover is designed as a so-called slow-down cover which requires time to open/remove in order for the component inside to fully discharge any electric potential. However, the outer cover which opens the hazardous voltage interlock loop is also often fixed with multiple screws or similar fastening devices, adding unnecessary time and effort to any work to be done on the high voltage components.

The present disclosure provides an improved housing for high voltage components, an improved high voltage electric system comprising at least one such a housing and an improved vehicle comprising such a high voltage electric system. The improved housing offers easier access to the high voltage electric component without compromising the safety of a user working on the component. In particular, the disclosure offers an easy and quick opening of the hazardous voltage interlock loop.

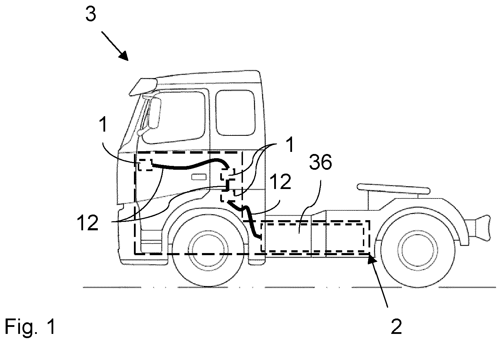

**FIG. 1** is an exemplary side-view of a vehicle 3 according to an example. The vehicle 3 comprises a high voltage electric system 2 according to another example. The high voltage electric system 2 is symbolized by a dashed outline, indicating that the system 2 may distributed through-out the vehicle 3. The high voltage electric system 2 may comprise a hazardous voltage interlock loop 12, which, when opened, is configured to discharge an electric potential of any high voltage components 10 (not shown in **Fig. 1**) connected to the hazardous voltage interlock loop 12. The high voltage electric system may further comprise a high voltage electric energy storage system 36, such as a battery, a fuel cell, a capacitor, etc., and at least one housing 1 for the high voltage component 10, according to another example.

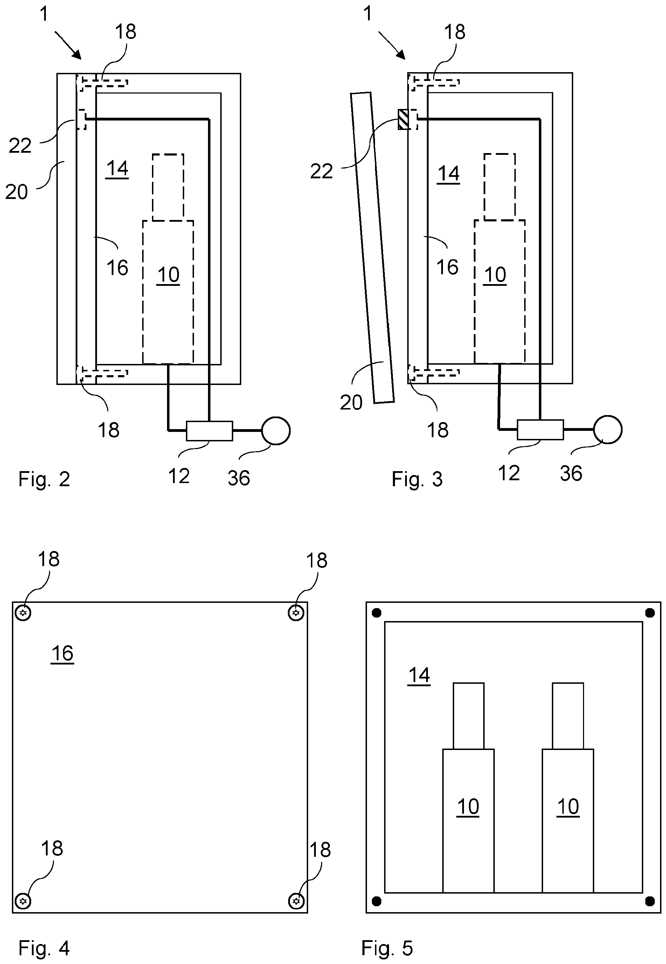

**Fig. 2** and **Fig. 3** exemplify a housing 1 for a high voltage component 10, which high voltage component 10 is protected by a hazardous voltage interlock loop 12, according to a first aspect of the invention. The housing 1 comprises an inner compartment 14 configured to at least partially enclose a high voltage component 10, an inner cover 16 removably attached to the inner compartment 14 by at least one fastening device 18 and configured to prevent access to the inner compartment 14 when attached to the inner compartment 14. The at least one fastening device 18 may for instance be a threaded screw.

The housing 1 also comprises an outer cover 20 movable to and from a first position, in which first position the outer cover 20 is configured to cover and to prevent access to the at least one fastening device 18 of the inner cover 16.

The housing 1 further comprises a switch 22 configured to close the hazardous voltage interlock loop 12 when the outer cover 20 is in the first position. The outer cover 20 is releasably fixable in relation to the inner cover 16 in the first position by a hand-operated locking mechanism. The switch 22 is configured to open the hazardous voltage interlock loop 12 to discharge an electric potential of the high voltage component 10 when the outer cover 20 is moved from the first position. The first aspect of the disclosure may seek to enable a quick and easy opening of the hazardous voltage interlock loop 12 without exposing a user to any high voltage potentials. Removal of the outer cover 20 triggers the opening of the hazardous voltage interlock loop 12. The removal of the outer cover 20 does not require any significant time or effort when opening the housing 1. However, the inner cover 16 is still provided with fastening devices 18 to slow down removal of the inner cover 16. The hazardous voltage interlock loop 12 is opened by moving the outer cover 20 from the first position. The at least one fastening device 18 ensures that the high voltage component 10 is discharged before the inner cover 16 can be removed.

The at least one fastening device 18 of the inner cover 16 may be configured to prevent a user from opening the inner compartment 14 before the hazardous voltage interlock loop 12 has discharged any electric potential of the high voltage component 10 located in the inner compartment 14. As an example, the at least one fastening device 18 may have a low pitch thread, requiring time to unfasten. Alternatively, a plurality of fastening devices 18, such as threaded screws, bolts, or pins, may have to be released or removed before the inner cover 16 may be removed. The number of fastening devices 18 may be adapted to require that the time it takes to remove them is at least equal to the time required for an electric potential of the high voltage component 10 of the inner compartment 14 to discharge.

The at least one fastening device 18 is inaccessible when the outer cover 20 is in the first position. The outer cover 20 must be moved from the first position before the at least one fastening device 18 may be accessed. Consequently, the hazardous voltage interlock loop 12 needs to be opened, by moving the outer cover 20 from the first position and triggering the switch 22, before the at least one fastening device 18 of the inner cover 16 may be accessed.

**Fig. 2** illustrates the outer cover 20 in the first position and **Fig. 3** shows the outer cover 20 moved from the first position. The switch 22 may be resiliently biased by the outer cover 20 to close the hazardous voltage interlock loop 12 when the outer cover 20 is in the first position. The switch 22 may further be configured to be released by the outer cover 20 to open the hazardous voltage interlock loop 12 when the outer cover 20 is moved from the first position. As an example, the switch 22 may be a spring-biased button which is depressed when the outer cover 20 is in the first position, thereby closing the hazardous voltage interlock loop 12. When the outer cover 20 is moved from the first position, the spring-biased button may be released to open the hazardous voltage interlock loop 12.

**Fig. 4** illustrates a front-view of the inner cover 16 when the outer cover 20 has been moved from the first position. The at least one fastening device 18, herein in the form of four screws 18, is shown to be exposed by the removal of the outer cover 20.

**Fig. 5** depicts the front-view of **Fig. 4**, but where the inner cover 16 has also been removed to allow access to the high voltage component 10 in the inner compartment 14.

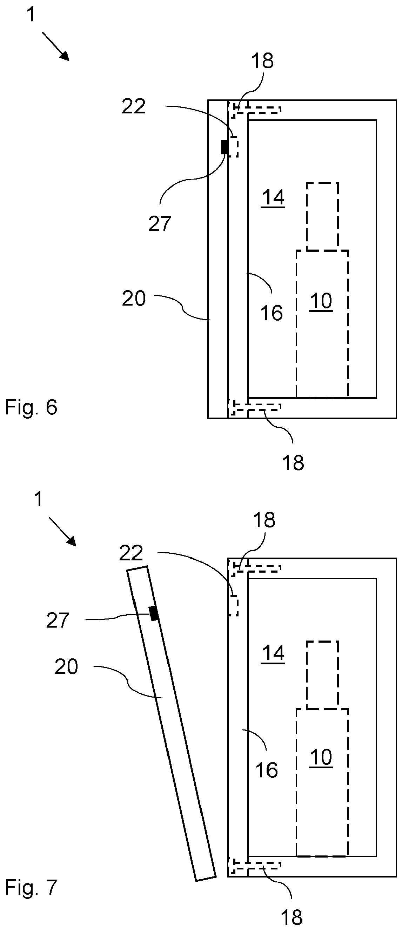

As shown in **Fig. 6** and **Fig. 7**, the switch 22 may alternatively comprise a sensor (not explicitly shown) and the outer cover 20 may comprise a permanent magnet 27. The sensor may be configured to detect the presence of the outer cover 20 in the first position by detecting a magnetic field of the permanent magnet 27 to control the switch 22 to close the hazardous voltage interlock loop 12 when the outer cover 20 is in the first position and to open the hazardous voltage interlock loop 12 when the outer cover 20 is moved from the first position.

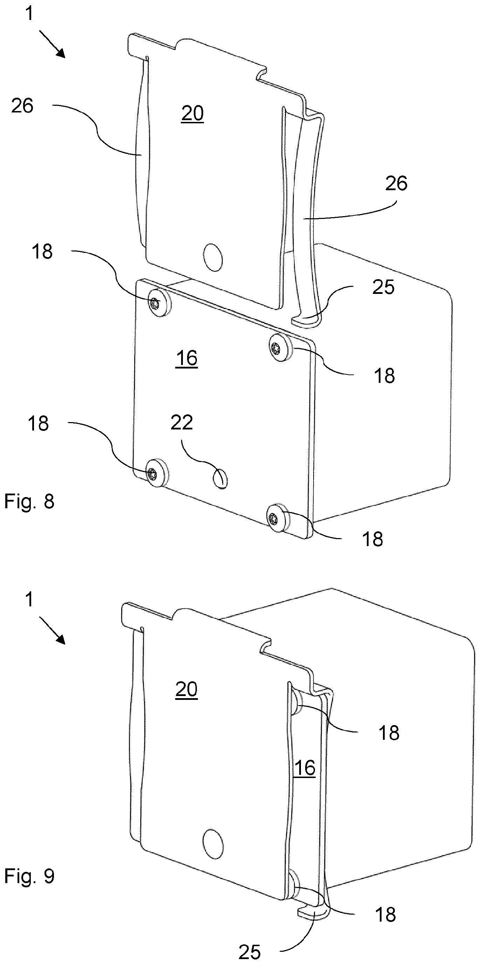

The hand-operated locking mechanism may comprise at least one form-locking member 26 of at least the outer cover 20, as shown in **Fig. 8** and **Fig. 9****.** The form-locking members 26 may reliably keep the outer cover 20 in the first position while at the same time offering a user a simple and quick solution for moving the outer cover 20 from the first position when the inner cover 16 is to be removed to open the inner compartment 14.

The form-locking members 26 may be configured to releasably fix the outer cover 20 in the first position relative to the inner cover 16 in form-locking and frictional engagement. Thereby, applying a manual force to the form-locking members 26 may release and disengage the form-locking members 26.

The form-locking members 26 may be resiliently flexible and configured to enable a sliding movement of the outer cover 20 relative to the inner cover 16 to and from the first position. Applying a manual force to the form-locking members 26 may thus resiliently flex the form-locking member 26 out of engagement and release the outer cover 20 to be moved from the first position. The resilience of the form-locking members 26 may allow the outer cover 20 to be returned to the first position when the inner cover 16 and the inner compartment 14 have been closed.

The at least one form-locking member 26 is exemplified by two resiliently flexible arms 26. In the drawings the resiliently flexible arms 26 are vertically elongated allowing a sliding movement of the outer cover 20 relative to the inner cover 16. Lower ends of the arms are shaped as hooks 25 which are configured to engage a part of the inner cover 16 in form-locking engagement. The hooks 25 may be disengaged by applying a manual force to the hooks 25 to bend them out of engagement with the inner cover 16 to allow movement of the outer cover 20 from the first position. The resilience of the form-locking members 26 may allow the outer cover 20 to be returned to the first position when the inner cover 16 and the inner compartment 14 have been closed. Of course, the elongated arms may in other examples extend in another direction than a vertical direction, such as in a horizontal direction.

**Fig. 8** shows the outer cover 20 removed from the first position, thereby triggering the switch 22 and opening the hazardous voltage interlock loop 12 (not shown in **Fig. 8** or **Fig. 9**). The at least one fastening device 18 is exposed.

**Fig. 9** shows the outer cover 20 in the first position. In the first position, the outer cover 20 prevents access to the at least one fastening device 18.

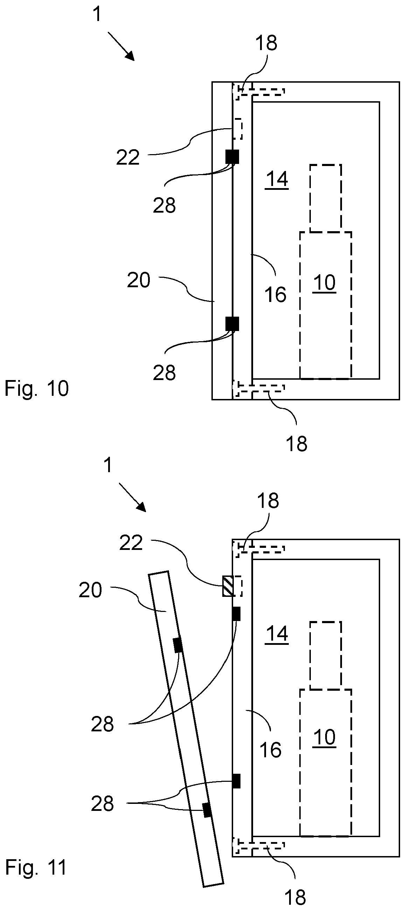

**Fig. 10** and **Fig. 11** show the locking mechanism as comprising at least one magnet 28 releasably fixing the outer cover 20 in the first position in relation to the inner cover 16. Thereby, the outer cover 20 may be moved from the first position by simply overcoming an attracting force of the at least one magnet 28. The at least one magnet 28 may be configured such that the attracting force of the magnet 28 reliably keeps the outer cover 20 in the first position and that a manual operation of a user is required to overcome the attracting force and to move the outer cover 20 from the first position.

**Fig. 10** shows the outer cover 20 in the first position. In the first position, the outer cover 20 prevents access to the at least one fastening device 18.

**Fig. 11** shows the outer cover 20 removed from the first position, thereby triggering the switch 22 and opening the hazardous voltage interlock loop 12 (not shown in **Fig. 10** or **Fig. 11**). The at least one fastening device 18 is exposed.

The switch 22 is shown as a resiliently biased switch, or button. However, a switch 22 comprising a magnetic sensor, as described hereinabove, is also conceivable.

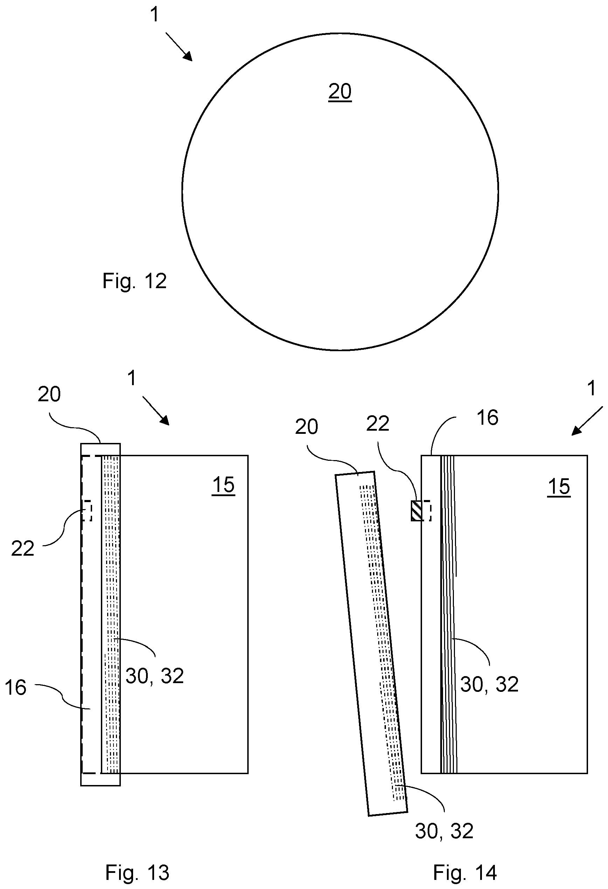

**Figs 12-14** exemplify that the locking mechanism may comprise mutually inclined surfaces 30, of at least the outer cover 20. The mutually inclined surfaces 30 may be configured to enable rotational movement of the outer cover 20 in relation to the inner cover 16 to releasably fix the outer cover 20 in relation to the inner cover 16 in the first position. **Fig. 12** shows a front-view of the housing 1, comprising a circular outer cover 20 which may be rotated to engage or disengage the mutually inclined surfaces 30.

As shown in **Fig. 13** and **Fig. 14****,** the mutually inclined surfaces 30 may comprise mutually engaging threads 32. In the example the threads 30, 32 are arranged on the outer cover 20 and on an outside surface 15 of the inner compartment 14. However, the threads 30, 32 could also be arranged on the outer cover 20 and on the inner cover 16.

Alternatively, the mutually inclined surfaces 30 may comprise a bayonet connection (not shown) arranged between the outer cover 20 and the inner cover 16 or between the outer cover 20 and the outer surface 15 of the inner compartment 14.

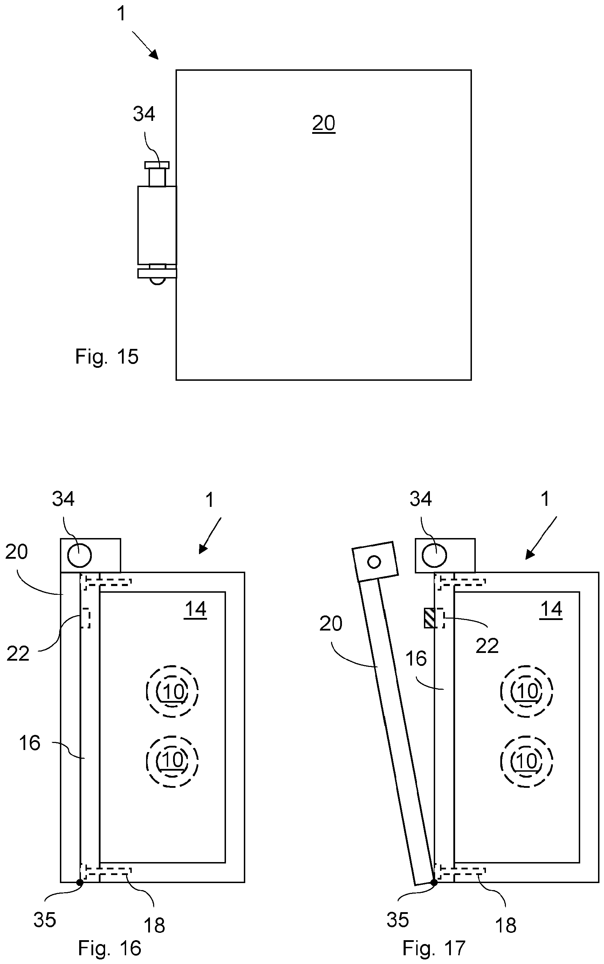

**Fig. 15** depicts a housing 1 where the locking mechanism comprises a lock 34 and wherein the outer cover 20 is arranged on a hinge 35 between the outer cover 20 and the inner cover 16, or between the outer cover 20 and the inner compartment 14. The lock 34 may comprises a spring pin configured to releasably fix the outer cover 20 in relation to the inner cover 16 in the first position. By opening the lock 34, the outer cover may moved from the first position by rotation around the hinge 35, as shown in **Fig. 16** and **Fig. 17****.**

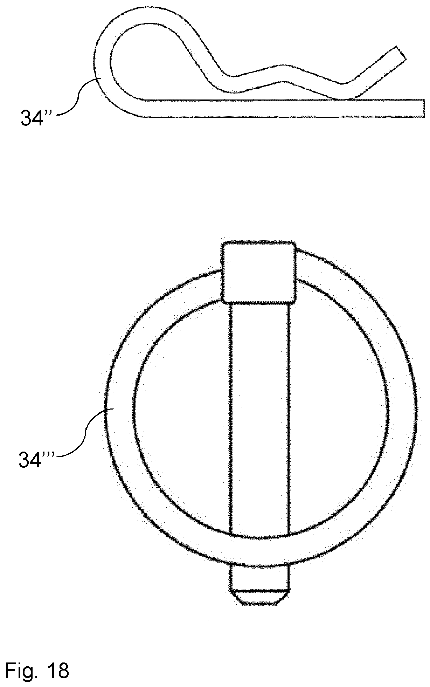

**Figs 15-17** show the lock 34 comprising a locking pin 34' configured to releasably fix the outer cover 20 in relation to the inner cover 16 in the first position. The locking pin 34' may be spring biased. Alternatively, the lock 34 may comprise a spring pin 34" or a linch pin 34'" which may be removed to open the outer cover 20. Examples of a spring pin 34" and a linch pin 34‴ are shown in **Fig. 18****.**

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A housing (1) for a high voltage component (10) protected by a hazardous voltage interlock loop (12), the housing (1) comprising:
- an inner compartment (14) configured to at least partially enclose a high voltage component (10),
- an inner cover (16) removably attached to the inner compartment (14) by at least one fastening device (18) and configured to prevent access to the inner compartment (14) when attached to the inner compartment (14),
- an outer cover (20) movable to and from a first position, in which first position the outer cover (20) is configured to cover and to prevent access to the at least one fastening device (18) of the inner cover (16),
- a switch (22) configured to close the hazardous voltage interlock loop (12) when the outer cover (20) is in the first position, and
wherein the outer cover (20) is releasably fixable in relation to the inner cover (16) in the first position by a hand-operated locking mechanism, and wherein the switch (22) is configured to open the hazardous voltage interlock loop (12) to discharge an electric potential of the high voltage component (10) when the outer cover (20) is moved from the first position.

2. The housing (1) of claim 1, wherein the switch (22) is resiliently biased by the outer cover (20) to close the hazardous voltage interlock loop (12) when the outer cover (20) is in the first position and wherein the switch (22) is configured to be released by the outer cover (20) to open the hazardous voltage interlock loop (12) when the outer cover (20) is moved from the first position.

3. The housing (1) of claim 1, wherein the switch (22) comprises a sensor and the outer cover (20) comprises a permanent magnet (27) and wherein the sensor is configured to detect the presence of the outer cover (20) in the first position by detecting a magnetic field of the permanent magnet (27) to control the switch (22) to close the hazardous voltage interlock loop (12) when the outer cover (20) is in the first position and to open the hazardous voltage interlock loop (12) when the outer cover (20) is moved from the first position.

4. The housing (1) of any one of claims 1-3, wherein the locking mechanism comprises at least one form-locking member (26) of at least the outer cover (20).

5. The housing (1) of claim 4, wherein the at least one form-locking member (26) is configured to releasably fix the outer cover (20) in the first position relative to the inner cover (16) in form-locking and frictional engagement.

6. The housing (1) of any one of claims 4 or 5, wherein the at least one form-locking member (26) is resiliently flexible and configured to enable a sliding movement of the outer cover (20) relative to the inner cover (16) to and from the first position.

7. The housing (1) of any one of claims 1-3, wherein the locking mechanism comprises at least one magnet (28) releasably fixing the outer cover (20) in the first position in relation to the inner cover (16).

8. The housing (1) of any one of claims 1-3, wherein the locking mechanism comprises mutually inclined surfaces (30), of at least the outer cover (20), the mutually inclined surfaces (30) being configured to enable rotational movement of the outer cover (20) in relation to the inner cover (16) to releasably fix the outer cover (20) in relation to the inner cover (16) in the first position.

9. The housing (1) of claim 8, wherein the mutually inclined surfaces (30) comprise mutually engaging threads (32).

10. The housing (1) of claim 8, wherein the mutually inclined surfaces (30) comprise a bayonet connection.

11. The housing (1) of any one of claims 1-3, wherein the locking mechanism comprises a lock (34) and wherein the outer cover (20) is arranged on a hinge (35) between the outer cover (20) and the inner cover (16), or between the outer cover (20) and the inner compartment (14).

12. The housing (1) of claims 11, wherein the lock (34) comprises a spring pin configured to releasably fix the outer cover (20) in relation to the inner cover (16) in the first position.

13. The housing (1) of claim 11, wherein the lock (34) comprises a locking pin configured to releasably fix the outer cover (20) in relation to the inner cover (16) in the first position.

14. A high voltage electric system (2) for a vehicle (3), the high voltage electric system (2) comprising a hazardous voltage interlock loop (12), a high voltage electric energy storage system (36) and at least one housing (1) according to any one of claims 1-13.

15. A vehicle (3) comprising the high voltage electric system (2) of claim 14.
